# EUROPEAN PATENT APPLICATION

(11) **EP 2 544 193 A2**
(43) Date of publication of application: **09.01.2013**
(21) Application number: 12175221.6
(22) Date of filing: 06.07.2012
(51) Int. Cl.: H01B 3/18

(54) **Covering material, superconducting electric wire and electrical device**

(30) Priority: 07.07.2011 JP 2011151054
(71) Applicant: NITTO DENKO CORPORATION, Osaka 567 (JP); Nitto Shinko Corporation, Sakai-shi, Fukui 910-0381 (JP)
(72) Inventor: Matsushita, Kiichiro, Ibaraki-shi Osaka 567-8680 (JP); Hanai, Hiroomi, Ibaraki-shi Osaka 567-8680 (JP); Hayashi, Kazunori, Sakai-shi, Fukui 910-0381 (JP); Fujiki, Jun, Sakai-shi Fukui 910-0381 (JP); Oohashi, Akihiro, Sakai-shi Fukui 910-0381 (JP); Takayanagi, Kayoko, Sakai-shi Fukui 910-0381 (JP); Mukobata, Kazumasa, Sakai-shi Fukui 910-0381 (JP); Tanaka, Yoshinori, Sakai-shi Fukui 910-0381 (JP)
(74) Representative: Grünecker, Kinkeldey, Stockmair & Schwanhäusser

(57) **Abstract**

Provided is a covering material 10 characterized in that the covering material is a covering material for covering a superconducting wire, a tensile strength at break thereof at -196°C is 12.0 N/3 mm or more, and a tensile elongation at break thereof at -196°C is 12% or more. The covering material 10 preferably includes a backing 11 made of a polyimide resin. The covering material 10 preferably includes a viscoelastic layer 12 formed on one surface of the backing 11.

## Description

### BACKGROUND OF THE INTENTION

### Field of the Invention

The present invention relates to a covering material, a superconducting electric wire and an electrical device.

### Description of the Related Art

Rectangular electric wires prepared by covering rectangular wires with insulating covering materials have hitherto been used in coil devices to be used in electrical devices, such as rotary devices and magnets (see, for example, Japanese Patent Application Laid-Open No. 2000-4552 (Patent Document 1)). The Patent Document 1 discloses a rectangular electric wire produced by winding a polyester tape six turns around rectangular wires arranged in parallel to each other in a half-lap manner to achieve insulation.

### Prior Art Documents

### Patent Documents

Patent Document 1: Japanese Patent Application Laid-open No. 2000-4552

Recently, superconducting wires have been usable at liquid nitrogen temperature, have allowed comparatively high critical current density to be obtained, and have been developed to such an extent that such superconducting wires can be extended in length. Accordingly, such superconducting wires are expected to be used in electrical devices.

### SUMMARY OF THE INVENTION

However, the present inventors have for the first time revealed a problem that in the case where the rectangular wire disclosed in the Patent Document 1 is applied to a superconducting wire, the superconducting wire is used at liquid nitrogen temperature, and hence the properties thereof are degraded.

In view of the aforementioned problem, an object of the present invention is to provide a covering material suppressed in degradation of the properties thereof, which degradation is caused by covering a superconducting wire, and also provide a superconducting electric wire and an electrical device.

The present inventors paid attention to the properties of the covering material at an ultralow temperature such as liquid nitrogen temperature, and made a diligent study on a covering material capable of suppressing the degradation of the properties during the operation of an electrical device provided with a superconducting electric wire; consequently, the present inventors have accomplished the present invention.

Specifically, according to the present invention, there is provided a covering material, in which the covering material is a covering material for covering a superconducting wire; a tensile strength at break thereof at -19F°C is 12.0 N/3 mm or more; and a tensile elongation at break thereof at -196°C is 12% or more.

According to the covering material of the present invention, the tensile strength at break and the tensile elongation at break at -196°C fall within the aforementioned ranges, and hence the followability of the covering material is satisfactory with respect to the change of the superconducting wire due to stress and the temperature variation of the superconducting wire in the liquid nitrogen temperature region. Therefore, even when the expansion, vibration, flexure or the like of the superconducting wire occurs during the operation of the superconducting electric wire obtained by covering a superconducting wire with the covering material of the present invention, it is possible to suppress the detachment of the covering material from the superconducting wire and the occurrence of the cracking of the covering material. Consequently, it is possible to provide a covering material capable of suppressing the degradation of the properties thereof, which degradation is caused by covering a superconducting wire.

The covering material preferably includes a backing containing a polyimide resin.

The polyimide resin has heat resistance and also is a nonflammable material, and hence has excellent flame retardancy as an insulating material to be used for electrical devices. Consequently, the degradation of the properties of the covering material provided with a backing made of a polyimide resin comes to be more suppressed.

The covering material preferably includes a backing and a viscoelastic layer formed on one side of the backing.

When a superconducting wire is covered with the covering material so as for the viscoelastic layer to be brought into contact with the superconducting wire, because the viscoelastic layer has a larger adhesion strength than the backing, the detachment of the covering material from the superconducting wire is effectively suppressed. Consequently, the degradation of the properties of the covering material is more suppressed.

In the covering material, preferably the viscoelastic layer contains a silicone-based viscoelastic composition.

The silicone-based viscoelastic composition is excellent in cold resistance, radiation resistance, heat resistance and corrosion resistance, and hence can improve the properties of the viscoelastic layer.

The covering material preferably has a thickness of 8.0 µm or more and 30.0 µm or less, and the backing preferably has a thickness of 5.0 µm or more and 25.0 µm or less.

When the thickness of the covering material is 8.0 µm or more and the thickness of the backing is 5.0 µm or more, the strength can be improved. When the thickness of the covering material is 30.0 µm or less and the thickness of the backing is 25.0 µm or less, it is possible to increase the density of the superconducting wire in the superconducting electric wire formed when the superconducting wire is covered with the covering material consequently, the degradation of the properties of the superconducting electric wire is more suppressed.

A superconducting electric wire of the present invention includes the covering material described in any of the foregoing descriptions and a superconducting wire covered with the covering material.

The superconducting electric wire of the present invention includes a covering material in which the tensile strength at break at -196°C is 12 N/3 mm or more and the tensile elongation at break at -196°C is 12% or more; consequently, when the superconducting electric wire produced by covering a superconducting wire with the covering material is used in an electrical device and the electrical device is operated at liquid nitrogen temperature, the detachment or the cracking of the covering material can be suppressed, and hence it is possible to provide a superconducting electric wire in which the degradation of the properties thereof is suppressed.

An electrical device of the present invention is produced by using the aforementioned superconducting electric wire.

The electrical device of the present invention is provided with a superconducting electric wire in which the degradation of the properties is suppressed when the electrical device is operated at liquid nitrogen temperature; and hence, it is possible to provide an electrical device in which the degradation of the properties thereof is suppressed.

As described above, according to the present invention, it is possible to provide a covering material, a superconducting electric wire and an electrical device in each of which the degradation of the properties is suppressed, which degradation is caused by covering a superconducting electric wire with the covering material.

### BRIEF DESCRIPTION OF THE DRAWINGS

FIG. 1 is a schematic side view illustrating a covering material in Embodiment 1 of the present invention;
FIG. 2 is a schematic cross-sectional view illustrating the covering material in Embodiment 1 of the present invention, and is an enlarged cross-sectional view of the region II in FIG. 1;
FIG. 3 is a schematic oblique perspective view illustrating a superconducting electric wire in Embodiment 2 of the present invention;
FIG. 4 is a schematic plan view illustrating the superconducting electric wire in Embodiment 2 of the present invention;
FIG. 5 is a schematic view illustrating the superconducting electric wire in Embodiment 2 of the present invention, and is a schematic cross-sectional view along the line V-V in each of FIGS. 3 and 4;
FIG. 6 is a schematic oblique perspective view illustrating a superconducting coil as an example of an electrical device in Embodiment 3 of the present invention;
FIG. 7 is a schematic view illustrating the measurement device for measuring in Examples the low-temperature tensile strength at break and the low-temperature tensile elongation at break;
FIG. 8 is a schematic view illustrating the interior of the measurement device for measuring the low-temperature tensile strength at break and the low-temperature tensile elongation at break in Examples;
FIG. 9 is a schematic view illustrating the tensile condition of an evaluation sample in the interior of the measurement device for measuring the low-temperature tensile strength at break and the low-temperature tensile elongation at break in Examples; and
FIG. 10 is a schematic view illustrating the measurement device for measuring the partial discharge onset voltage in Examples.

### DETAILED DESCRIPTION OF THE PREFERRED EMBODIMENTS

Hereinafter, the embodiments of the present invention are described with reference to the accompanying drawings. Hereinafter, the same symbols are attached to the same or corresponding parts in the drawings, of which the descriptions are not repeated.

### Embodiment 1

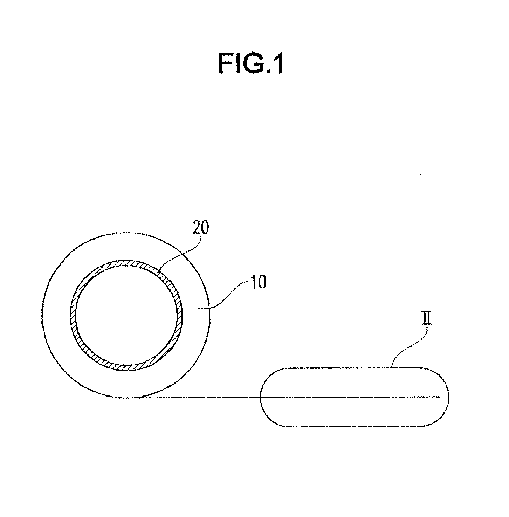

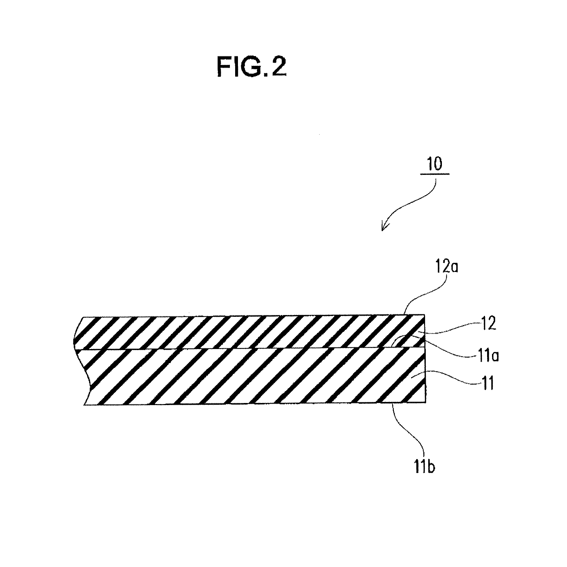

With reference to FIGS. 1 and 2, the covering material in an embodiment of the present invention is described. As shown in FIGS. 1 and 2, the covering material 10 in Embodiment 1 of the present invention is a covering material for covering a superconducting wire.

As shown in FIG. 1, the covering material 10 in the present embodiment is of a tape shape, and is, for example, wound around a winding core 20 in a roll shape. The covering material 10 is not limited to a tape shape, but may also take any other shapes such as a sheet shape and a film shape.

As shown in FIG. 2, the covering material 10 includes a backing 11 having an upper surface 11a and a lower surface 11b opposite to the upper surface 11a, and a viscoelastic layer 12 formed on the upper surface 11a of the backing 11. The viscoelastic layer 12 may be omitted; a viscoelastic layer 12 may also be formed on the lower surface 11b; however, a viscoelastic layer 12 is preferably formed on the surface only on one side of the backing 11.

Between the backing 11 and the viscoelastic layer 12, another layer may also be further formed. On the upper surface 12a of the viscoelastic layer 12, a release liner (not shown) for protecting the upper surface 12a may also be formed.

The backing 11 is not particularly limited as long as the backing 11 is of an insulator; however, the backing 11 preferably has radiation resistance and heat resistance. Examples of such a backing 11 include polyimide resin, polyether resin, polyether ether ketone resin, polyether imide resin and polyamide-imide resin. These resins may be used each alone or as mixtures of two or more thereof. Among these resins, in particular, polyimide resin is preferably used as the backing 11. Polyimide resin is a nonflammable material as well as a heat resistant material; hence, because of having an excellent flame retardancy as an insulating material used in an electrical device, polyimide resin has excellent properties as the backing 11 of the covering material 10 of the present embodiment.

Polyimide resin can be obtained by heretofore well known or conventional methods. For example, polyimide can be obtained by allowing an organic tetracarboxylic acid dianhydride and a diamino compound (diamine) to react with each other to synthesize a polyimide precursor (polyamide acid), and by dehydrating and ring-closing the polyimide precursor.

Examples of the organic tetracarboxylic acid dianhydride include: pyromellitic acid dianhydride (PMDA), 3,3',4,4'-biphenyl tetracarboxylic acid dianhydride (EPDA), 4,4'-oxydiphthalic acid anhydride (ODPA), 2,2-bis(2,3-dicarboxyphenyl)-1,1,1,3,3,3-hexafluoropropane dianhydride, 2,2- bis(3,4-dicarboxyphenyl)-1, 1, 1,3,3,3- hexafluoropropane dianhydride, 3,3',4,4'-benzophenone tetracarboxylic acid dianhydride, bis(3,4-dicarboxyphenyl)ether dianhydride and bis(3,4-dicarboxyphenyl)sulfone dianhydride. These organic tetracarboxylic acid dianhydrides may be used each alone or as mixtures of two or more thereof.
Among the aforementioned organic tetracarboxylic acid dianhydrides, when importance is attached to flexibility, the compounds having an ether bond such as ODPA are preferable. Among the aforementioned organic tetracarboxylic acid dianhydrides, when importance is attached to strength, PMDA having a rigid structure can be used, and when the balance between strength and flexibility is considered, BPDA can be used.

Examples of the diamino compound include m-phenylenediamine, p-phenylenediamine, 3,4-diaminodiphenyl ether, 4,4'-diaminodiphenyl ether, 4,4'-diaminodiphenyl sulfone, 3,3'-diaminodiphenyl sulfone, 2,2-bis(4-aminophenoxyphenyl)propane, 2,2-bis(4-aminopbenoxyphenyl)hexafluoropropane, 1,3-bis(4-aminophenoxy)benzene, 1,4-bis(4-aminophenoxy)benzene, 2,4-diaminotoluene, 2,6-diaminotoluene, diaminodiphenylmethane, 2,2'-dimethyl-4,4'-diaminobiphenyl and 2,2'-bis(triffuaromethyl)-4,4'-diaminobiphenyl. These diamino compounds may be used each alone or as mixtures of two or more thereof.

As the diamino compound, compounds having an ether bond are preferable; specifically, it is preferable to use 4,4'-diaminodiphenyl ether (ODA). The inclusion of ODA improves the elongation of the covering material 10, and allows the covering material 10 to be designed as a soft film. The addition amount of ODA in the diamine compound is preferably 10 mol% or more and 100 mol% or less, more preferably 30 mol% or more and 100 mol% or less and furthermore preferably 50 mol% or more and 100 mol% or less.

For the polyimide resin used in the present embodiment, it is preferable to use pyromellitic acid dianhydride or 3,3',4,4'-biphenyl tetracarboxylic acid dianhydride as an organic tetracarboxylic acid dianhydride, and p-phenylenediamine or 4,4'-diaminodiphenyl ether as a diamino compound.

As such a polyimide resin, for example, the following commercially available products (given in terms of registered trademarks) can also be used: Kapton H (manufactured by Du Pont-Toray Co., Ltd.), Kapton EN (manufactured by Du Pont-Toray Co., Ltd.), Upilex R (manufactured by Ube Industries, Ltd.), Apical AH (manufactured by Kaneka Corp.) and Apical NPI (manufactured by Kaneka Corp.).

The backing 11 has a thickness of preferably 5.0 µm or more and 25.0 µm or less and more preferably 10.0 µm or more and 12.5 µm or less. The thickness falling within this range allows a sufficient insulation property to be ensured, and when the superconducting wire is covered with such a covering material, the function of the superconducting wire can be sufficiently exhibited.
Specifically, when the thickness of the backing 11 is 25.0 µm or less, it is possible to increase the wire occupation rate of the superconducting wire in the superconducting electric wire formed when the superconducting wire is covered with the covering material, and hence it is possible to improve the properties of the superconducting electric wire. When the thickness of the backing 11 is 12.5 µm or less, the properties of the superconducting electric wire can be more improved.
When the thickness of the backing 11 is 5.0 µm or more, it is possible to increase the insulation property of the superconducting electric wire formed when the superconducting wire is covered with the covering material 10, and hence it is possible to suppress the occurrence of dielectric breakdown during operation. When the thickness of the backing 11 is 10.0 µm or more, it is possible to more suppress the occurrence of dielectric breakdown.

For the purpose of improving the anchoring capability of the backing 11 with the below described viscoelastic layer 12, the backing 11 in the present embodiment may be subjected to a chemical treatment such as a sputtering etching treatment, a corona treatment or a plasma treatment, or alternatively may be coated with a primer.

The backing 11 in the present embodiment may be formed of a layer or a plurality of layers.

The viscoelastic layer 12 includes a base polymer constituting a viscoelastic material exhibiting viscoelasticity at room temperature (23°C). Such a base polymer is not particularly limited, and base polymers appropriately selected from heretofore known base polymers can be used as such a base polymer; examples of such a base polymer include acrylic-based polymers, rubber-based polymers, vinyl alkyl ether-based polymers, silicone-based polymers, polyester-based polymers, polyamide-based polymers, urethane-based polymers, fluorine-based polymers and epoxy-based polymers. These base polymers may be used each alone or as mixtures of two or more thereof. Among these base polymers, it is preferable to use a silicone-based polymer as the viscoelastic layer 12, from the viewpoint of being excellent in cold resistance, radiation resistance, heat resistance and corrosion resistance. In other words, the viscoelastic layer 12 preferably includes a silicone-based polymer-containing viscoelastic composition (silicone-based viscoelastic composition), and more preferably the viscoelastic layer 12 is mainly composed of a silicone-based viscoelastic composition with the balance being composed of inevitable impurities.

The silicone-based viscoelastic composition includes a cross-linking structure of a mixture mainly containing a silicone rubber and a silicone resin.

As the silicone rubber, for example, an organopolysiloxane including dimethylsiloxane as a main constitutional unit can be preferably used. A vinyl group or other functional groups may be introduced into the organopolysiloxane if necessary. The weight average molecular weight of the organopolysiloxane is usually 180,000 or more, and is preferably 280,000 or more and 1,000,000 or less and more preferably 500,000 or more and 900,000 or less. These silicone rubbers may be used each alone or as mixtures of two or more thereof. When the weight average molecular weight is low, the gel fraction can be adjusted by regulating the amount of a cross-linking agent.

It is possible to preferably use, as the silicone resin, for example, an organopolysiloxane made of a copolymer having at least one unit selected from the M unit (R₃SiO_{1/2}), the Q unit (SiO₂), the T unit (RSiO_{3/2}) and the D unit (R₂SiO) (in these units, R represents a monovalent hydrocarbon group or a hydroxy group). The organopolysiloxane made of the copolymer may have one or more OH groups, and additionally, may also have various functional groups such as a vinyl group, as introduced therein, if necessary. The functional groups to be introduced may also be groups to cause cross-linking reactions. As the copolymer, the MQ resin composed of the M unit and the Q unit is preferable.

The mixing ratio (weight ratio) between the silicone rubber and the silicone resin is not particularly limited; however, the ratio silicone rubber:silicone resin is preferably approximately 100:0 to 20:80 and more preferably approximately 100:0 to 30:70. The silicone rubber and the silicone resin may also be simply mixed together or may also be used as a partial condensation product between the silicone rubber and the silicone resin.

The aforementioned mixture usually contains a cross-linking agent for the purpose of converting the mixture into a cross-linked structure. The gel fraction of the silicone-based viscoelastic composition can be regulated with a cross-linking agent.

The gel fraction of the viscoelastic layer 12 varies depending on the type of the viscoelastic composition; the gel fraction of the viscoelastic layer 12 is generally preferably 20% or more and 99% or less and more preferably approximately 30% or more and 98% or less. The gel fraction falling within such a range offers an advantage that it is easy to establish the balance between adhesive force and retention force. Specifically, when the gel fraction is 99% or less, it is possible to suppress the occurrence of the decrease of the initial adhesive force and thus result in satisfactory sticking; when the gel fraction is 20% or more, a sufficient retention force is obtained, and hence the displacement of the covering material 10 can be suppressed.

The gel fraction (% by weight) of the viscoelastic composition in the present embodiment is a value obtained as follows: a sample of a dry weight W₁ (g) is sampled from the silicone-based viscoelastic composition and immersed in toluene; then the insoluble matter of the sample is taken out from the toluene; then after drying the weight W₂ (g) of the insoluble matter is measured, and the gel fraction is derived from the formula (W₂/W₁) × 100.

The silicone-based viscoelastic composition in the present embodiment can use the following generally used cross-linkages: a peroxide curing type cross-linkage due to a peroxide-based cross-linking agent and an addition reaction type cross-linkage due to a Si-H group-containing siloxane-based cross-linking agent.

The cross-linking reaction of the peroxide-based cross-linking agent is a radical reaction, and accordingly the cross-linking reaction is allowed to proceed usually at a high temperature of 150°C or higher and 220°C or lower. On the other hand, the cross-linking reaction between a vinyl group-containing organopolysiloxane and a siloxane-based cross-linking agent is an addition reaction, and accordingly the reaction usually proceeds at a low temperature of 80°C or higher and 150°C or lower. In the present embodiment, the addition reaction-type cross-linkage is preferable particularly from the viewpoint that the cross-linking can be completed at a low temperature in a short period of time.

As the peroxide-based cross-linking agent, various cross-linking agents having hitherto been used for the silicone-based viscoelastic composition can be used without any particular limitation. Examples of such a peroxide-based cross-linking agent include benzoyl peroxide, t-butylperoxy benzoate, dicumyl peroxide, t-butyl cumyl peroxide, t-butyl peroxide, 2,5-dimethyl-2,5-di-t-butylperoxy hexane, 2,4-dichlorobenzoyl peroxide, di-t-butylperoxy-diisopropyl benzene, 1,1-bis(t-butylperoxy)-3,3,5-trimethylcyclohexane and 2,5-dimethyl-2,5-di-t-butylperoxy hexyne-3. These peroxide-based cross-linking agents may be used each alone or as mixtures of two or more thereof. Usually, the used amount of the peroxide-based cross-linking agent is preferably 0.15 part by weight or more and 2 parts by weight or less and more preferably 0.5 part by weight or more and 1.4 parts by weight or less in relation to 100 parts by weight of the silicone rubber.

As the siloxane-based cross-linking agent, for example, a polyorganohydrogen siloxane having in the molecule thereof at least on average two or more hydrogen atoms bonded to the silicon atom is used. Examples of the organic group bonded to the silicon atom include an alkyl group, a phenyl group and a halogenated alkyl group; however, from the viewpoint of the easiness in synthesis and handling, a methyl group is preferable. The skeletal structure of siloxane may be any of linear chain, branched chain and annular structures; preferable among these is a linear chain structure.

The siloxane-based cross-linking agent is mixed in an addition amount such that the number of the hydrogen atoms bonded to the silicon atoms is preferably one or more and 30 or less and more preferably 4 or more and 17 or less in relation to one vinyl group in the silicone rubber and the silicone resin. When the number of the hydrogen atoms bonded to the silicon atoms is one or more, a sufficient cohesive force is obtained; when the number of the hydrogen atoms bonded to the silicon atoms is four or more, a more sufficient cohesive force is obtained; when the number of the hydrogen atoms bonded to the silicon atoms is 30 or less, the degradation of the adhesion property can be suppressed; and when the number of the hydrogen atoms bonded to the silicon atoms is 17 or less, the degradation of the adhesion property can be more suppressed.
When the siloxane-based cross-linking agent is used, usually a platinum catalyst is used; however, various other catalysts can also be used.
When the siloxane-based cross-linking agent is used, a vinyl group-containing organopolysiloxane is used as the silicone rubber, and the content of the vinyl group is preferably approximately 0.0001 mol/100 g or more and 0.01 mol/100 g or less.

Within a range not impairing the advantageous effects of the present invention, for example, the following heretofore known various additives can be appropriately mixed in the viscoelastic layer of the present invention, in addition to the aforementioned base polymer: a tackifier, a plasticizer, a dispersant, an antiaging agent, an antioxidant, a processing aid, a stabilizer, an antifoaming agent, a flame retardant, a thickener, a pigment, a softener and a filler.

The viscoelastic layer 12 has a thickness of preferably 1.0 µm or more and 25.0 µm or less and more preferably 3.0 µm or more and 5.0 µm or less. The thickness of the viscoelastic layer 12 falling within this range offers an advantage that an appropriate adhesiveness can be obtained.
Specifically, when the thickness of the viscoelastic layer 12 is 25.0 µm or less, it is possible to increase the wire occupation rate of the superconducting wire in the superconducting electric wire formed when the superconducting wire is covered with the covering material 10, and hence it is possible to more improve the properties of the superconducting electric wire. When the thickness of the viscoelastic layer 12 is 5.0 µm or less, the properties of the superconducting electric wire can be furthermore improved.
When the thickness of the viscoelastic layer 12 is 1.0 µm or more, the degree of adhesion of the viscoelastic layer 12 to the superconducting wire can be increased, and the detachment of the covering material 10 from the superconducting wire can be more suppressed. When the thickness of the viscoelastic layer 12 is 3.0 µm or more, the detachment of the covering material 10 can be furthermore suppressed.

In the covering material 10, the tensile strength at break at -196°C is 12.0 N/3 mm or more, preferably 13.8 N/3 mm or more, and more preferably 15.4 N/3 mm or more. When the tensile strength at break at -196°C is less than 12.0 N/3 mm, the strength at liquid nitrogen temperature is small, and hence the detachment or cracking due to vibration or the like tends to occur. When the tensile strength at break at -196°C is 13.8 N/3 mm or more, the detachment or cracking due to vibration or the like can be effectively suppressed, and when the tensile strength at break at -196°C is 15.4 N/3 mm or more, the detachment or cracking due to vibration or the like can be more effectively suppressed.

The tensile strength at break of the covering material 10 at -196°C is preferably as large as possible; however, from the viewpoint of production, the upper limit of the tensile strength at break at -196°C is, for example, 19.4 N/3 mm.

The aforementioned "tensile strength at break at -196°C" as referred to herein means the force observed when a covering material 10 of 3 mm in width is stretched and broken under the condition that the covering material 10 of 3 mm in width is disposed in an atmosphere at -196°C. This indicates that, the larger the numerical value of the tensile strength at break at -196°C is, the larger the strength at -196°C is.

The aforementioned "the tensile strength at break at -196°C" can be regulated, for example, by using as the backing a material having an aromatic rigid unit in the molecule thereof.

The covering material 10 has a tensile elongation at break at -196°C of 12% or more, preferably 16% or more and more preferably 34% or more. When the tensile elongation at break at -196°C is less than 12%, the covering material 10 is hardly expanded at liquid nitrogen temperature, and hence, detachment or cracking due to magnetic field, friction heat or the like tends to occur. When the tensile elongation at break at -196°C is 16% or more, the detachment or cracking due to vibration or the like can be effectively suppressed. When the tensile elongation at break at -196°C is 34% or more, the detachment or cracking due to vibration or the like can be more effectively suppressed.

The tensile elongation at break of the covering material 10 at -196°C is preferably as large as possible; however, from the viewpoint of production, the upper limit of the tensile elongation at break at -196°C is, for example, 59%.

The aforementioned "tensile elongation at break at -196°C" as referred to herein means (Y - X)/X × 100(%) where X and Y are as found in the following: when a covering material 10 of 3 mm in width and X mm in length is stretched at a stretching rate of 100 mm/min and broken under the condition that the covering material 10 of 3 mm in width and X mm in length is disposed in an atmosphere at -196°C, the length of the covering material 10 is observed to be Y mm. This indicates that, the larger the numerical value of the tensile elongation at break at -196°C is, the larger the elongation at -196°C is.

The aforementioned "tensile elongation at break at -196°C" can be regulated by selecting a material having flexible structures or units allowing the molecular chain to rotate relatively easily, such as an ether bond, an amide bond and an ester bond.

In the aforementioned tensile strength at break and tensile elongation at break, the temperature of -196°C is defined as the reference temperature. This is because superconducting wires generally use liquid nitrogen as a cooling medium, and hence the tensile strength at break and the tensile elongation at break at the boiling point of liquid nitrogen is to be specified. By adopting the reference temperature of -196°C, the present inventors have found such properties that are capable of effectively suppressing the detachment or cracking of the covering material 10 occurring during operation.

The covering material 10 has preferably a thickness of 8.0 µm or more and 30.0 µm or less and more preferably a thickness of 13.0 µm or more and 15.5 µm or less. When the thickness of the covering material 10 is 8.0 µm or more, the covering material 10 is sufficient in strength and excellent in handleability, and when the thickness of the covering material 10 is 13.0 µm or more, the covering material 10 is more sufficient in strength and more excellent in handleability. When the thickness of the covering material 10 is 30.0 µm or less, it is possible to increase the wire occupation rate of the superconducting wire in the superconducting electric wire formed when the superconducting wire is covered with the covering material, and hence it is possible to more improve the properties of the superconducting electric wire. When the thickness of the covering material 10 is 15.5 µm or less, it is possible to furthermore improve the properties of the superconducting electric wire.

When the width and the winding angle of the superconducting wire are considered in the case where the covering material 10 is spirally wound with a winding angle of 20° or more and 80° or less and in a half-lap manner in which the covering material 10 partially overlaps with itself, the covering material 10 preferably has a width of one or more times and two or less times the width of the superconducting wire to be covered. The width of such a covering material 10 is, for example, preferably 1 mm or more and 80 mm or less, more preferably 1.5 mm or more and 60 mm or less and furthermore preferably 2 mm or more and 40 mm or less.

The covering material 10 is preferably a lengthy product because the covering of the superconducting wire with the covering material 10 is preferably free from the patching together portion corresponding to the connection portion in the covering of the superconducting wire. The length of such a covering material 10 is, for example, preferably 500 mm or more, more preferably 1000 mm or more and furthermore preferably 3000 mm or more. The covering material 10 of the present embodiment is wound in a roll shape around the winding core 20 to be retained; however, the covering material 10 of the present embodiment may also be retained as wound around a winding core 20 in a plurality of rows, namely, in so-called bobbin winding.

Next, with reference to FIGS. 1 and 2, the production method of the covering material 10 in the present embodiment is described.

First, as described above, the backing 11 having the upper surface 11a and the lower surface 11b opposite to the upper surface 11a is prepared.

Next, the viscoelastic layer 12 is formed on the upper surface 11a of the backing 11. The formation method of the viscoelastic layer 12 is not particularly limited; for example, the viscoelastic layer 12 can be formed by a method of coating the upper surface 11a of the backing 11 with a silicone-based viscoelastic composition.

Specifically, a solution prepared by dissolving, in a solvent such as toluene, the silicone-based viscoelastic composition including a silicone rubber, a silicone resin, a cross-linking agent, a catalyst and the like is applied to the upper surface 11a of the backing 11, and next, by heating the aforementioned mixture, the solvent is distilled off and cross-linking is performed. Examples of the formation method of the viscoelastic layer 12 including the silicone-based viscoelastic composition in the present embodiment include: an extrusion coating method based on roll coating, kiss-roll coating, gravure coating, reverse coating, roll brush coating, spray coating, dip roll coating, bar coating, knife coating, air-knife coating, curtain coating, lip coating or die coating.

By performing the foregoing steps, the covering material 10 shown in FIG. 2 can be produced. The production method of the covering material 10 is not particularly limited to the above-described method. When the covering material 10 is provided with a release liner, the covering material 10 may be produced, for example, by the following method.

Specifically, first, a release liner is prepared. Examples of the release liner include: paper; films of synthetic resins such as polyethylene, polypropylene and polyethylene terephthalate; and rubber sheet, paper, cloth, non-woven fabric, net, foam sheet and metal foil or laminate sheets of these.

Next, on the release liner, for example, the viscoelastic layer 12 including the silicone-based viscoelastic composition is formed. The formation method of the viscoelastic layer 12 is not particularly limited; however, when the viscoelastic layer 12 including the silicone-based viscoelastic composition to perform the addition reaction type cross-linking is formed by using toluene as the solvent, the heating temperature is, for example, preferably 80°C or higher and 150°C or lower and more preferably 100°C or higher and 130°C or lower. The heating temperature is not particularly limited as long as the heating temperature allows the solvent to be distilled off and allows the intended cross-linking reaction to proceed.

Next, the viscoelastic layer 12 formed on the release liner is transferred onto the backing 11. By performing the foregoing steps, the covering material 10 shown in FIG. 2 can be produced.

In the present embodiment, as shown in FIG. 1, a step of winding, around the winding core 20, the covering material 10 shown in FIG. 2 is further performed. This step may be omitted depending on the factors such as the shape of the covering material 10.

As described above, the covering material 10 in the present embodiment is a covering material for covering a superconducting wire, a tensile strength at break thereof at -196°C is 12.0 N/3 mm or more, and a tensile elongation at break thereof at -196°C is 12% or more.

According to the covering material 10 in the present embodiment, the tensile strength at break and the tensile elongation at break at -196°C fall within the aforementioned ranges, respectively, hence in the liquid nitrogen temperature region, the covering material 10 tends to be stretched and is flexible, and accordingly, even when the change of the superconducting wire due to the temperature variation or stress is exerted on the covering material 10, the strength and the followability of the covering material 10 are satisfactory. Consequently, even when the expansion, vibration, bending or the like of the superconducting wire occurs during the operation at liquid nitrogen temperature, the detachment or cracking of the covering material 10 can be suppressed. For example, during the operation of a superconducting coil produced by using a superconducting electric wire obtained by covering a superconducting wire with the covering material 10, even when the superconducting wire is expanded by the generated magnetic field, the covering material 10 is also stretched so as to follow this expansion; consequently, the occurrence of the detachment or cracking of the covering material 10 can be suppressed. Consequently, the covering material 10 suppressed in the degradation of the properties thereof can be realized.

### Embodiment 2

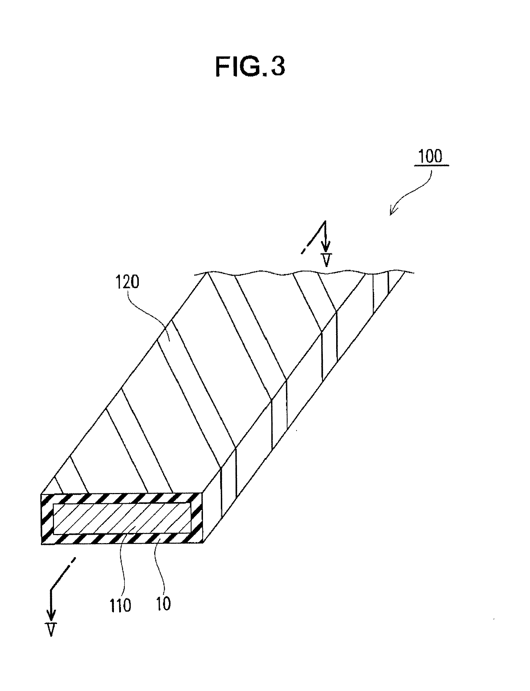

With reference to FIGS. 3 to 5, the superconducting electric wire 100 in Embodiment 2 of the present invention is described. As shown in FIG. 3, the superconducting electric wire 100 in the present embodiment includes the covering material 10 of Embodiment 1 and a superconducting wire 110 covered with this covering material 10.

The mode of the covering of the superconducting wire 110 with the covering material 10 is not particularly limited; the covering material 10 may be spirally wound, or may be wound in such a way that the superconducting wire 110 runs along the lengthwise direction of the covering material 10 (so as to be attached in the longitudinal direction). As shown in FIGS. 3 to 5, the superconducting wire 110 in the present embodiment is covered with the covering material 10 in such a way that the covering material 10 is spirally wound around the superconducting wire 110 so as to partially overlap with itself in the lap portion 120.

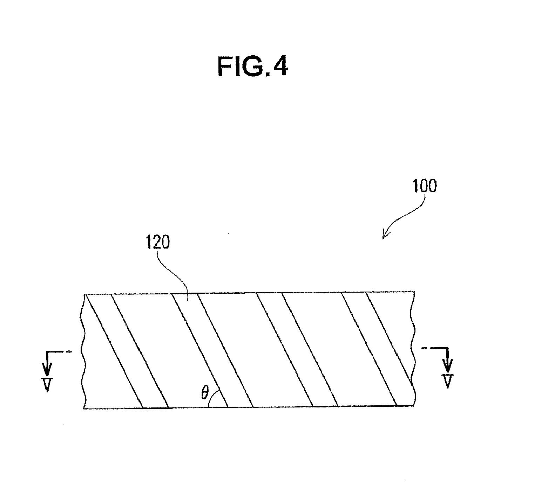

As shown in FIG. 4, the angle θ (also referred to as the winding angle θ or the winding-around angle θ) between the extension direction of the superconducting wire 110 and the winding direction of the covering material 10 is, for example, 20° or more and 80° or less.

The superconducting wire 110 is a tape-shaped wire, and each of the edges thereof may be angular or curved (rounded). As the superconducting wire 110, various superconducting wires such as a bismuth-based, an yttrium-based and a niobium-based superconducting wire can be appropriately used.

An example of a specific dimension of the superconducting wire 110 is such that the thickness is 1 mm or more and 10 mm or less, the width is 1 mm or more and 20 mm or less, and the aspect ratio (the ratio width/thickness in the cross-sectional shape) is approximately 1 or more and 60 or less.

Next, the production method of the superconducting electric wire 100 in the present embodiment is described.

First, according to Embodiment 1, the covering material 10 is produced.

Next, the superconducting wire 110 is prepared, and as shown in FIGS. 3 to 5, the covering material 10 is spirally wound around the superconducting wire 110 in such a way that the covering material 10 partially overlaps with itself in a half lap manner. When the covering material 10 is not provided with the viscoelastic layer 12, the covering material 10 is disposed in such a way that an area of the upper surface 11a (the lower surface 11b) of the backing 11 of the covering material 10 is brought into contact with the superconducting wire 110, and the rest area of the upper surface 11a (the lower surface 11b) of the backing 11 of the covering material 10 is brought into contact with an area of the lower surface 11b (the upper surface 11a) of the backing 11 held in contact with the superconducting wire 110 at the upper surface 11a thereof. When the covering material 10 is provided with the viscoelastic layer 12, the covering material 10 is disposed in such a way that an area of the viscoelastic layer 12 is brought into contact with the superconducting wire 110, and the rest area of the viscoelastic layer 12 is brought into contact with an area of the lower surface 11b of the backing 11 of the covering material 10 held in contact with the superconducting wire 110.

In the case where the covering material 10 is provided with a release liner, when the covering material 10 is wound around the superconducting wire 110, the covering material 10 is wound around the superconducting wire 110 while the release liner and the upper surface 12a of the viscoelastic layer 12 are being released from each other.

By performing the foregoing steps, the superconducting electric wire 100 of the present embodiment shown in FIGS. 3 to 5 can be produced.

As described above, the superconducting electric wire 100 in the present embodiment includes the covering material 10 in Embodiment 1 and the superconducting wire 110 covered with the covering material 10.

The superconducting electric wire 100 in the present embodiment includes the covering material 10 in which the tensile strength at break at -196°C is 12 N/3 mm or more and the tensile elongation at break at -196°C is 12% or more, and hence when the superconducting electric wire 100 obtained by covering the superconducting wire 110 with the covering material 10 is used in an electrical device and the electrical device is operated at liquid nitrogen temperature, the elongation of the covering material 10 at liquid nitrogen temperature is satisfactory; accordingly, the detachment of the covering material 10 can be suppressed, and at the same time the cracking of the covering material 10 can also be suppressed, and the mutual displacement between the superconducting wire 110 and the covering material 10 can also be suppressed. When the detachment and the cracking of the covering material 10 can be suppressed, the decrease of the partial discharge onset voltage can be suppressed. The mutual displacement between the superconducting wire and the covering material 10 can be suppressed, hence the generation of friction heat can be suppressed, and accordingly, the superconducting condition during operation can be maintained. Consequently, the superconducting electric wire 100 in which the degradation of the properties is suppressed can be realized.

### Embodiment 3

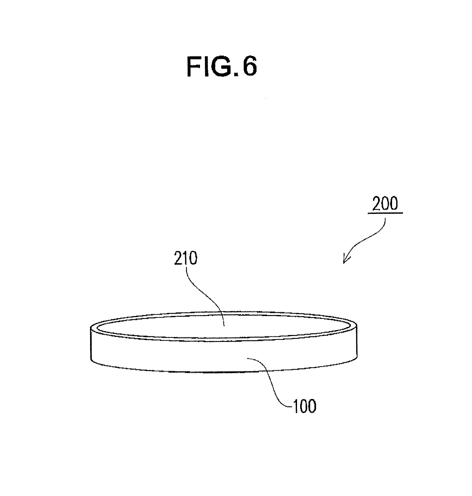

With reference to FIG. 6, description is made on a superconducting coil 200 as an example of the electrical device of Embodiment 3 of the present invention. As shown in FIG. 6, the superconducting coil 200 of the present embodiment includes a reel 210 and the superconducting electric wire 100 of Embodiment 2 wound around the reel 210.

The reel 210 is not particularly limited as long as the superconducting electric wire 100 can be wound around the reel 210; however, examples of the reel 210 include a cylindrical type and a racetrack type. The superconducting electric wire 100 may be a string, or may be formed of a plurality of strings connected to each other according to the required length. The coil may be a single pancake type, a double pancake type or a laminated type formed of three or more coils.

The production method of the superconducting coil 200 in Embodiment 3 includes a step of preparing the reel 210, and a step of winding the superconducting electric wire 100 around the reel 210.

In the present embodiment, the superconducting coil 200 is described as an example of the electrical device; however, the electrical device of the present invention is not limited to the superconducting coil, and for example, may be a superconducting magnet, a superconducting cable or an electric power storage apparatus.

As described above, the superconducting coil 200 as an example of the electrical device of the present embodiment is produced by using the superconducting electric wire 100 of Embodiment 2.

According to the superconducting coil 200 as an example of the electrical device of the present invention, the superconducting coil 200 includes the covering material 10 in which the degradation of properties is suppressed when the superconducting coil 200 is operated at liquid nitrogen temperature; and hence the superconducting coil 200 in which the degradation of the properties is suppressed can be realized.

### Examples

In present Examples, the effects of the covering material for a superconducting wire were examined in which the tensile strength at break at -196°C is 12.0 N/3 mm or more and the tensile elongation at break at -196°C is 12% or more.

### Example 1

In Example 1, according to Embodiment 1, the covering material 10 was produced. Specifically, 70 parts by weight of "X-40-3229 (a silicone rubber, solid content: 60%, manufactured by Shin-Etsu Chemical Co., Ltd.) and 30 parts by weight of "KR-3700" (a silicone resin, solid content: 60%, manufactured by Shin-Etsu Chemical Co., Ltd.) as a silicone-based viscoelastic material, 0.5 part by weight of a platinum catalyst "PL-50T" (manufactured by Shin-Etsu Chemical Co., Ltd.) and 315 parts by weight of toluene as a solvent were mixed together, and the resulting mixture was stirred with a disper to prepare a silicone-based viscoelastic composition. The silicone-based viscoelastic composition was applied with a fountain roll onto "Kapton 50H" (thickness: 12.5 µm, manufactured by Du Pont-Toray Co., Ltd.) as the backing 11 made of a polyimide resin in such a way the thickness of the silicone-based viscoelastic composition layer after drying was 3.0 µm, and cured and dried under the conditions of a drying temperature set at 150°C and a drying time of 1 minute, to prepare a covering material 10 in which a viscoelastic layer 12 having a gel fraction of 74% was formed on the backing 11. The obtained covering material 10 was taken up onto a winding core 20 (inner diameter: 76 mm) to yield a roll-shaped wound body shown in FIG. 1.

### Example 2

The covering material 10 of Example 2 was produced in the same manner as in Example 1 except that in Example 2 "Kapton 50EN" (thickness: 12.5 µm, manufactured by Du Pont-Toray Co., Ltd.) was used as the backing 11 made of a polyimide resin.

### Example 3

The covering material 10 of Example 3 was produced in the same manner as in Example 1 except that in Example 3 "Kapton 40EN" (thickness: 10.0 µm, manufactured by Du Pont-Toray Co., Ltd.) was used as the backing 11 made of a polyimide resin.

### Example 4

The covering material 10 of Example 4 was produced in the same manner as in Example 2 except that no viscoelastic layer was formed.

### Example 5

The covering material 10 of Example 5 was produced in the same manner as in Example 1 except that in Example 5 a polyethylene terephthalate film "Lumilar S10" (thickness: 25.0 µm, manufactured by Toray Industries, Inc.) was used as the backing 11, and no viscoelastic layer was formed.

### Comparative Example 1

The covering material 10 of Comparative Example 1 was produced in the same manner as in Example 1 except that in Comparative Example 1 a polyethylene terephthalate film "Lumilar S10" (thickness: 12.0 µm, manufactured by Toray Industries, Inc.) was used as the backing 11, and no viscoelastic layer was formed.

### Comparative Example 2

The covering material 10 of Comparative Example 2 was produced in the same manner as in Example 1 except that in Comparative Example 2 a polyethylene naphthalate film "Teonex Q51" (thickness: 16.0 µm, manufactured by Teijin DuPont Films Japan Ltd.) was used as the backing 11, and no viscoelastic layer was formed.

### (Evaluation Methods)

For each of Examples 1 to 5 and Comparative Examples 1 and 2, the low-temperature tensile strength at break, the low-temperature tensile elongation at break, and the partial discharge onset voltage were measured respectively as follows, and the detachment and cracking were also evaluated as follows. The results thus obtained are shown in Table 1.

### (Measurement of Low-Temperature Tensile Strength at Break and Low-Temperature Tensile Elongation at Break)

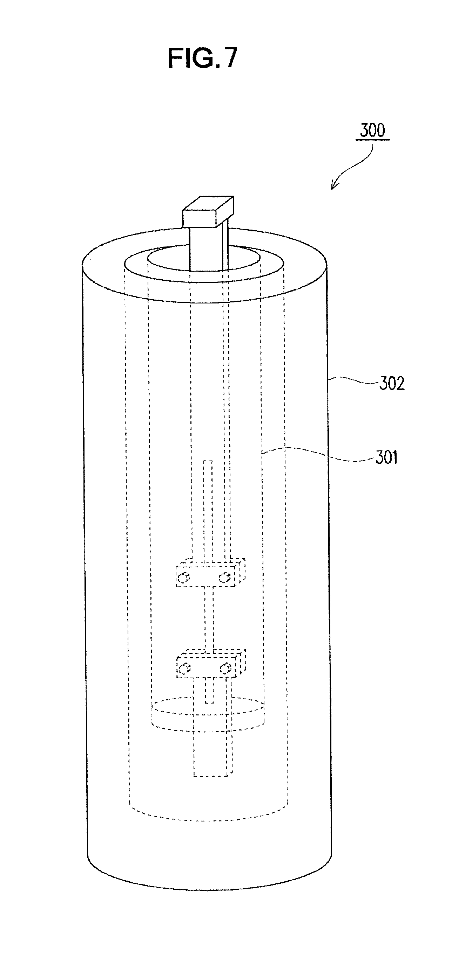

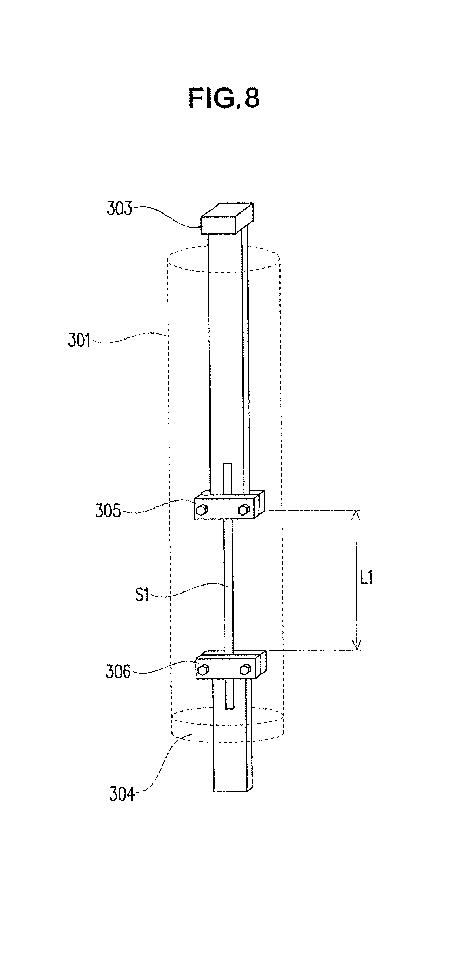

For the measurement of the low-temperature tensile strength at break and the low-temperature tensile elongation at break, by using a measurement apparatus 300 shown in FIGS. 7 and 8, the low-temperature tensile strength at break in liquid nitrogen was measured.

Specifically, as shown in FIGS. 7 and 8, the followings were disposed in the interior of the measurement apparatus 300: a vessel 301 for accommodating liquid nitrogen, a heat-insulating layer 302 for heat-insulating the vessel 301, jigs 303 and 304 for fixing an evaluation sample S1 to a tensile tester, and chuck members 305 and 306 for fixing the evaluation sample S1. The chuck members 305 and 306 allowed the length of the evaluation sample S1 to be adjusted within a predetermined range. For the purpose of preventing the leakage of the liquid nitrogen filled in the vessel 301, the joint portion between the vessel 301 and the lower jig 304 is of a screw type, and for the same purpose, a commercially available sealing member made of Teflon used for the joints of water pipes or the like was further formed in the aforementioned joint portion.

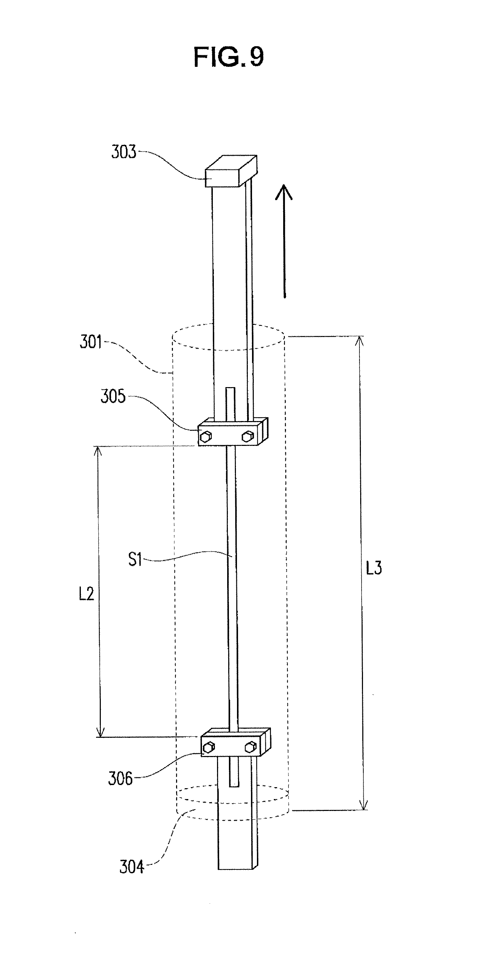

Each of the covering materials 10 produced in Examples 1 to 5 and Comparative Examples 1 and 2 was cut to a width of 3 mm and a length of 80 mm to prepare an evaluation sample S1. As shown in FIG. 8, the evaluation sample S1 was held by the chuck members 305 and 306, and the distance L1 between the chuck members was set at 50 mm. Under such a condition, liquid nitrogen was poured so as for at least the evaluation sample S1 to be immersed and the sample was immersed for 15 minutes.
Next, as shown in FIG. 9, the evaluation sample S1 was pulled upward as indicated with an arrow at a tensile rate of 100 mm/min, and the length L2 (the distance between the chuck members 305 and 306) of the evaluation sample S1 and the force at the time when the evaluation sample S1 was broken were respectively measured.
The low-temperature tensile strength at break is presented in Table 1 as the force exerted on the evaluation sample S1 when the evaluation sample S1 was broken. The results obtained are shown in Table 1.
The low-temperature tensile elongation at break is presented in Table 1 as the value obtained by (the length L2 of the evaluation sample S1 at break - the distance between the chuck members L1) ÷ 50 mm × 100(%). The results obtained are shown in Table 1. The value, (the length L2 of the evaluation sample S1 at break - the distance between the chuck members L1), is the elongation of the evaluation sample S1.
The low temperature as referred to in the terms, the low-temperature tensile strength at break and the low-temperature tensile elongation at break, can be approximated as the boiling point of liquid nitrogen, namely, -196°C according to the aforementioned measurement method.

In the measurement apparatus 300, the depth L3 of the vessel 301 was set at 220 mm, and the maximum value of the length L2 of the evaluation sample S1 was set at 100 mm. As such a measurement apparatus 300, for example, "UTM-4-100" manufactured by Toyo Baldwin Co., Ltd. can be used.

### (Evaluation of Detachment and Cracking)

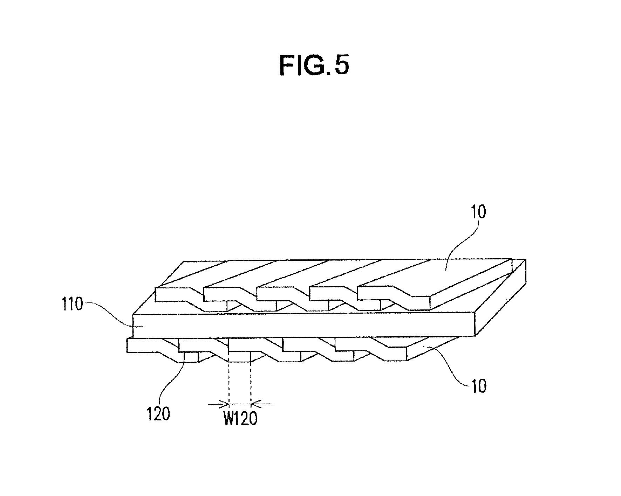

From each of the covering materials produced in Examples 1 to 5 and Comparative Examples 1 and 2, a specimen of 5 mm in width was prepared. The specimen was spirally wound around a superconducting wire, "Di-BSCCO" (wire: bismuth-based superconducting wire, 0.23 mm in thickness × 4.3 mm in width, Sumitomo Electric Industries, Ltd.) at a winding angle (the angle θ in FIG. 4) of 60 degrees with the overlap (the width W120 of the lap portion 120 in FIG. 5) of the covering material with itself of approximately 2.0 mm to prepare an evaluation sample of 10 cm in length.

The evaluation sample was wound around a mandrel of 30 mm in outer diameter and immersed in liquid nitrogen for 15 minutes. Then, the periphery of the evaluation sample wound around the mandrel was visually observed to examine the occurrence/non-occurrence of the detachment and cracking of the covering material. The results thus obtained are shown in Table 1. In Table 1, the case where neither detachment nor cracking was observed is marked with "O" and the case where at least either detachment or cracking was observed is marked with "×".

### (Measurement of Partial Discharge Onset Voltage)

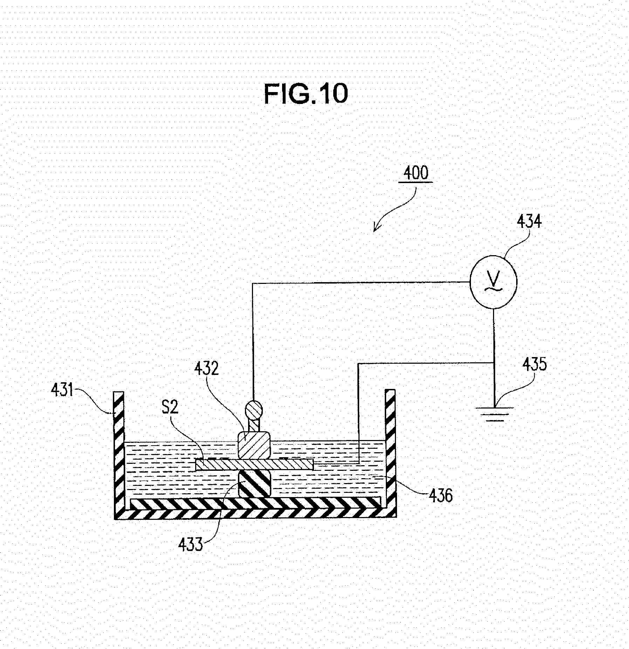

An evaluation sample for detachment and cracking was unwound from the mandrel, to be used as the evaluation sample S2 for the measurement of the partial discharge onset voltage; the partial discharge onset voltage in liquid nitrogen of the evaluation sample S2 was measured with a measurement apparatus 400 shown in FIG. 10.

Specifically, in FIG. 10, the evaluation sample S2 was disposed in a vessel 431 in a manner sandwiched between an electrode 432 and a support 433. A partial discharge measurement apparatus 434 was connected to the electrode 432 on the upper side, and a ground wire 435 was connected to the superconducting wire of the evaluation sample S2. Then, liquid nitrogen 436 was added so as for at least the evaluation sample S2 to be immersed in liquid nitrogen, and under the condition that the temperature was stabilized (after an elapsed time of approximately 15 minutes), the measurement of the partial discharge onset voltage was started.

The size of the electrode 432 was as follows: 25 mmφ, R 2.5 mm and the contact area 20 mmφ. When the voltage was increased at a voltage increase rate of 200 Vrms/sec, the applied voltage when the discharge of a discharge amount of 100 pC or more occurred at a rate of 50 PPS (the number of the occurrence of discharge per unit time) or more was taken as the partial discharge onset voltage. The results thus obtained are shown in Table 1 presented below.

### (Evaluation Results)

**[Table 1]**

| | Example 1 | Example 2 | Example 3 | Example 4 | Example 5 | Comparative Example 1 | Comparative Example 2 |
|---|---|---|---|---|---|---|---|
| Backing type | Kapton 50H | Kapton 50EN | Kapton 40EN | Kapton 50EH | PET | PET | PEN |
| Backing thickness [µm] | 12.5 | 12.5 | 10.0 | 12.5 | 25.0 | 12.0 | 16.0 |
| Presence/absence of viscoelastic layer | Present | Present | Present | Absent | Absent | Absent | Absent |
| Viscoelastic layer thickness [µm] | 3.0 | 3.0 | 3.0 | - | - | - | - |
| Low-temperature tensile strength at break [N/3 mm] | 19.4 | 17.1 | 13.8 | 15.4 | 19.3 | 10.5 | 19.2 |
| Low-temperature tensile elongation at break [%] | 59 | 34 | 35 | 16 | 15 | 17 | 11 |
| Detachment, cracking | O | O | O | O | O | × | × |
| Partial discharge onset voltage [Vrms] | 700 | 700 | 620 | 300 | 260 | 200 | 200 |

As shown in Table 1, the covering materials in Examples 1 to 5 in which the tensile strength at break at -196°C was 12.0 N/ 3 mm or more and the tensile elongation at break at -196°C was 12% or more were free from the detachment and cracking in relation to the superconducting wire at liquid nitrogen temperature, and were satisfactory. Consequently, the partial discharge onset voltages of the covering materials of Examples 1 to 5 were 260 Vrms or more, and the degradation of the properties of the covering materials was able to be suppressed.

The covering material of Comparative Example 1 in which the tensile strength at break at -196°C was less than 12.0 N/3 mm underwent the occurrence of the detachment and cracking, and hence the partial discharge onset voltage was low and the properties of the covering material were degraded.

The covering material of Comparative Example 2 in which the tensile elongation at break at -196°C was less than 12% underwent the occurrence of the detachment and cracking, and hence the partial discharge onset voltage was low and the properties of the covering material were degraded.

From what has been described above, according to present Examples, it has been able to be verified that the covering material can suppress the occurrence of the detachment and cracking in the liquid nitrogen temperature region owing to the fact that the tensile strength at break at -196°C is 12.0 N/ 3 mm or more and the tensile elongation at break at -196°C is 12% or more, and hence there is provided a covering material suppressed in degradation of the properties thereof, which degradation is caused by covering a superconducting wire.

As described above, Embodiments and Examples of the present invention have been described. Appropriate combinations of the features of the individual Embodiments and individual Examples are also anticipated from the very beginning. Embodiments and Examples disclosed this time are presented for the purpose of exemplification in every aspect, and should be construed as non-limiting. The scope of the present invention is defined by the appended claims rather than foregoing Embodiments and Examples, and all the modifications in the meanings and the scope equivalent to the claims are intended to be included.

## Claims

1. A covering material (10), **characterized in that**
the covering material is a covering material for covering a superconducting wire;
a tensile strength at break thereof at -196°C is 12.0 N/3 mm or more; and a tensile elongation at break thereof at -196°C is 12% or more.

2. The covering material (10) according to claim 1, comprising:
a backing (11); and
a viscoelastic layer (12) formed on one surface of the backing (11).

3. The covering material (10) according to claim 2, wherein the viscoelastic layer (12) contains a silicone-based viscoelastic composition.

4. The covering material (10) according to claim 2 or 3,
wherein the covering material has a thickness of 8.0 µm or more and 30.0 µm or less; and
the backing (11) has a thickness of 5.0 µm or more and 25.0 µm or less.

5. The covering material (10) according to any one of claims 2 to 4, wherein the backing (11) contains a polyimide resin.

6. The covering material (10) according to claim 1, comprising a backing (11) containing a polyimide resin.

7. A superconducting electric wire (100), **characterized in that** the superconducting electric wire (100) comprises:
the covering material (10) according to any one of claims 1 to 6; and
a superconducting wire (110) covered with the covering material.

8. An electrical device (200), **characterized in that** the electric device (200) is produced by using the superconducting electric wire (100) according to claim 7.
